# EUROPÄISCHE PATENTANMELDUNG

(11) **EP 4 071 382 A1**
(43) Veröffentlichungstag der Anmeldung: **12.10.2022**
(21) Anmeldenummer: 22160095.0
(22) Anmeldetag: 03.03.2022
(51) Int. Cl.: F16F 15/32

(54) **WELLENTILGER**

(30) Priorität: 09.04.2021 DE 102021108890
(71) Anmelder: Vibracoustic SE, 64293 Darmstadt (DE)
(72) Erfinder: DUERRE, Markus, 79395 Neuenburg am Rhein (DE); GUTMANN, Joschka, 79219 Staufen im Breisgau (DE); PAUL, Christian, 79424 Auggen (DE); SOMMERFELD, Manuel, 79115 Freiburg (DE); KESSLER, Hagen, 79379 Müllheim (DE); HESS, Joerg, 79400 Kandern (DE)
(74) Vertreter: Patentanwälte Olbricht Buchhold Keulertz

(57) **Zusammenfassung**

Vorgeschlagen wird ein Wellentilger zum Tilgen von Schwingungen einer Welle (4, 6), umfassend einen Elastomerkörper (8), welcher von einer zentralen Längsmittelachse (A) durchgriffen ist, wobei der Elastomerkörper (8) in Radialrichtung (R) abragende und sich in Längsrichtung (L) erstreckende Haltegeometrien aufweist zum Verpressen des Wellentilgers mit der Welle (4, 6), wobei die Haltegeometrien jeweils in zwei sich bezüglich der Längsmittelachse (A) gegenüberliegenden ersten Winkelfenstern (W1) mit einer Breite von jeweils höchstens 90° angeordnet sind, so dass der Wellentilger (2) entlang einer ersten Abstimmungsachse (A1), die in Radialrichtung (R) verläuft, eine radiale Presskraft mit der Welle (4, 6) ausbilden kann, welche größer ist als eine Presskraft in einer davon abweichenden Raumrichtung, die in Radialrichtung (R) verläuft.

## Beschreibung

Die Erfindung betrifft einen Wellentilger gemäß dem Oberbegriff von Anspruch 1 und eine Baugruppe mit den Merkmalen des Anspruchs 10.

Bei heck- und allradgetriebenen Fahrzeugen wird die Kraft eines Motors, der im Bug des Fahrzeugs angeordnet ist mittels einer Längswelle und Seitenwellen auf die Hinterräder übertragen. Die Längswelle verbindet den Motor bzw. den Getriebeblock mit einem Differenzialgetriebe und kann mehrteilig ausgeführt sein. Das Differenzialgetriebe ist über die Seitenwellen mit den Radnaben der Hinterräder verbunden. Die Wellen weisen Eigenformen auf, die beim Hochlaufen der Wellen angeregt werden können. Die Anregung der Eigenformen führt zu Unwuchtkräften, die auf die Lagerstellen der Wellen einwirken, welche wiederum Geräusche im Fahrzeug verursachen.

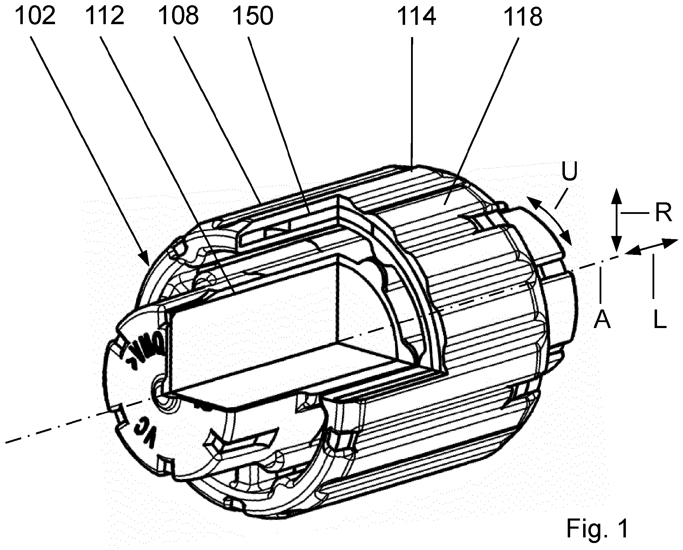

Um diese Geräusche zu reduzieren, ist aus der Praxis ein in Fig. 1 gezeigten Tilger bekannt, der als mitrotierender Tilger an der entsprechenden Welle befestigt werden kann. Der Tilger ist radial auf die entsprechende Frequenz der Eigenform der Welle abgestimmt, um die Verstärkung der Eigenform zu reduzieren. Dadurch können die Geräusche im Fahrzeug, die durch die Anregung der Eigenformen entstehen, reduziert werden. Der Tilger kann zum Beispiel ein Innenrohrtilger sein, der in einem inneren Hohlraum einer Hohlwelle befestigt werden kann, oder aber auch ein Seitenwellentilger sein, der auf der Außenumfangsfläche an einer Welle befestigt werden kann. Zur Befestigung kann der Tilger über ein Elastomerteil mit der Welle verpresst sein, das eine radiale Presskraft auf die Welle bewirkt. Durch die Presskraft wird über Reibungskräfte eine axiale Kraft für die Montage des Tilgers an einer Welle festgelegt.

Bei der Abstimmung des Tilgers auf die Eigenform der Welle wird die radiale Eigenform des Tilgers auf die Biegeeigenfrequenz der Welle in alle Radialrichtungen gleich abgestimmt. Ein solcher Tilger kann auch als Radialtilger bezeichnet werden. Das gilt für bekannte Innenrohrtilger wie für bekannte Seitenwellentilger gleichermaßen, weshalb diese um ihre Längsmittelachse rotationssymmetrisch ausgestaltet sind mit einer Zähligkeit von mitunter acht und mehr. Dies beeinflusst die axiale Einpresskraft bzw. Anpresskraft für die Montage des Tilgers in oder auf der Welle, sofern die Presskraft durch das Elastomerteil aufgebracht wird und keine zusätzliche Befestigungshülse vorhanden ist. Das Elastomerteil ist gleichzeitig für die radiale Eigenform des Tilgers verantwortlich. Die axiale Kraft für die Montage des Tilgers an der Welle darf einen unteren Schwellenwert nicht unterschreiten, um zu verhindern, dass der Tilger über die Lebensdauer axial entlang der Welle verrutscht und durch die Positionsveränderung seine Wirkung reduziert wird oder ganz verloren geht. Insbesondere bei niedrigen Abstimmfrequenzen, die kleiner als 120 Hz sind, wird bei Innenrohrtilgern in der Regel eine unterstützende Befestigungshülse und bei Seitenwellentilgern in der Regel ein Befestigungselement, z. B. eine unterstützende Schlauchschelle, benötigt, um die Position des Tilgers zu halten. Dies verursacht zusätzliche Kosten und einen unerwünscht erhöhten Montageaufwand.

Aufgabe der Erfindung ist es daher, einen Wellentilger zum Tilgen von Schwingungen einer Welle vorzuschlagen, der einen reduzierten Montageaufwand und reduzierte Kosten aufweist.

Hauptmerkmale der Erfindung sind im kennzeichnenden Teil von Anspruch 1 und in Anspruch 10 angegeben. Ausgestaltungen sind Gegenstand der Ansprüche 2 bis 9.

Erfindungsgemäß wird daher ein Wellentilger zum Tilgen von Schwingungen einer Welle vorgeschlagen, umfassend einen Elastomerkörper, welcher von einer zentralen Längsmittelachse durchgriffen ist, wobei der Elastomerkörper in Radialrichtung abragende und sich in Längsrichtung erstreckende Haltegeometrien aufweist zum Verpressen des Wellentilgers mit der Welle, wobei die Haltegeometrien jeweils in zwei sich bezüglich der Längsmittelachse gegenüberliegenden ersten Winkelfenstern mit einer Breite von jeweils höchstens 90° angeordnet sind, so dass der Wellentilger entlang einer ersten Abstimmungsachse, die in Radialrichtung verläuft, eine radiale Presskraft mit der Welle ausbilden kann, welche größer ist als eine Presskraft in einer davon abweichenden Raumrichtung, die in Radialrichtung verläuft. Die ausbildbare radiale Presskraft kann beispielsweise mindestens 400N, vorzugsweise mindestens 450N, weiter bevorzugt mindestens 500N betragen, um größer zu sein als eine axiale Auspresskraft, die den Wellentilger aus seiner Montagezustand axial und/oder radial zu verschieben versucht.

Der erfindungsgemäße Wellentilger zeichnet sich also dadurch aus, dass er nicht in alle Radialrichtungen identisch abgestimmt ist, bzw. unterschiedliche Abstimmungen in Radialrichtungen aufweist. Vielmehr kann er in Radialrichtung unterschiedliche Tilgungsfrequenzen erreichen. Dieser Grundgedanke ist strukturell durch die sich gegenüberliegenden Winkelfenster, welche die Haltegeometrien aufweisen, vorzugsweise die einzigen Haltegeometrien, realisiert. Der Wellentilger weist daher zumindest zwei Abstimmungsachsen auf, die sich in ihrer Funktion und Abstimmung unterscheiden.

Abstimmungsachsen verlaufen in Radialrichtung. Sie können die Längsmittelsachse des Wellentilgers schneiden. Entlang jeder Abstimmungsachse können sich entgegengerichtete Abstimmungsrichtungen erstrecken. Die Abstimmungsrichtungen auf einer Abstimmungsachse können identische Abstimmungsfrequenzen zugeordnet sein. Die erste Abstimmungsachse kann die beiden ersten Winkelfenster zentral durchlaufen.

Der Wellentilger ist entlang der ersten Abstimmungsachse vermittels der Haltegeometrien hoch abgestimmt oder abstimmbar. In diese Richtung ist er hart. Diese erste Abstimmungsachse kann auch als Opferachse bezeichnet werden, da das Tilgervermögen in diesen Richtungen der einfachen Verpressbarkeit geopfert wird. Es hat sich jedoch gezeigt, dass der negative Einfluss der hohen Abstimmung entlang der ersten Abstimmungsachse auf das Vermögen des Wellentilgers zur Abstimmung auf die Biegeeigenform der Welle vernachlässigbar gering ist. Durch diese hohe Abstimmung entlang der ersten Abstimmungsachse ist eine ausreichend hohe axiale Presskraft realisierbar. Die vom Stand der Technik genutzte Befestigungshülse zur Gewährleistung einer ausreichenden Presskraft kann entfallen. Die in den ersten Winkelfenstern enthaltenen Haltegeometrien können eine ausreichende Presskraft zur dauerhaften Fixierung des Wellentilgers an der Welle gewährleisten.

Der Wellentilger ist entlang einer von der ersten Abstimmungsachse abweichenden Raumrichtung oder entlang einer von der ersten Abstimmungsachse abweichenden zweiten Abstimmungsachse auf die Abstimmungsfrequenz für die Biegeeigenform der Welle abgestimmt oder abstimmbar. In diese Richtung ist er weich. Die Primärfunktion des Wellentilgers oder seiner dortigen Strukturen ist die Frequenzabstimmung.

Der erfindungsgemäße Wellentilger ist demnach kein Radialtilger mehr, sondern vielmehr ein Einachsentilger, der entlang einer definierten Abstimmungsachse fixiert und entlang einer davon abweichenden Abstimmungsachse tilgt. Der erfindungsgemäße Wellentilger ist entlang der ersten Abstimmungsachse steifer als in die davon abweichende Raumrichtung und/oder gegenüber der zweiten Abstimmungsachse. Der Steifigkeitsunterschied kann mindestens 20% betragen, vorzugsweise mindestens 30%, weiter bevorzugt mindesten 40%, noch weiter bevorzugt mindestens 50%. Die gegenüber jeder anderen Raumrichtung in Radialrichtung steifere Ausgestaltung entlang der ersten Abstimmungsachse führt dazu, dass die erste Abstimmungsachse eine definierte Schwingrichtung vorgibt. Der Wellentilger kann demnach im Einsatzzustand entlang einer definierten Schwingachse in die beiden Schwingrichtungen schwingen. Vorzugsweise entspricht die Schwingachse der zweiten Abstimmungsachse. Es wurde erkannt, dass bei einer entsprechenden Konturierung des Elastomerkörpers mit Haltegeometrien festgestellt, dass unterschiedliche Tilgungsfrequenzen in Radialrichtung erreicht werden können. Beim erfindungsgemäßen Wellentilger können die Haltegeometrien daher in Umfangsrichtung ungleichmäßig zueinander beabstandet sein.

Grundsätzlich können die beiden ersten Winkelfenster gleich oder ungleichgroß sein. Denkbar ist, dass die erste Winkelfensterbreite bestimmt wird durch die Außengeometrie, wie beispielsweise eine Kante, einer Seitenkante der Haltefläche in Umfangsrichtung, einer Seitenwand oder einer Kante an der Seitenwandbasis, der in dem Winkelfenster angeordneten zumindest einen Haltegeometrie.

Der Elastomerkörper kann einen Grundkörper umfassen, der eine Tilgermasse umgibt. Davon können die Haltegeometrien abragen.

Der Erfindungsgemäße Wellentilger kann ein Innenrohrtilger sein, bei welchem sich die Haltegeometrien nach radial außen erstrecken. Er kann jedoch auch ein Seitenwellentilger sein, bei welchem sich die Haltegeometrien nach radial innen erstrecken.

Unter einem Vormontagezustand soll eine Situation verstanden werden, in welcher der Wellentilger nicht mit einer Welle verpresst und ohne äußere Krafteinwirkung ist. Unter einem Montagezustand soll eine Situation verstanden werden, in welcher der Wellentilger mit einer Welle verpresst ist. Unter einer Haltegeometrie soll eine Struktur oder eine Anordnung von Strukturen verstanden werden, die primär, vorzugsweise ausschließlich, dem Halten oder Verpressen des Wellentilgers dient. Primär bedeutet, dass die Haltegeometrie eine Funktion überwiegend erfüllt. Bezüglich der Haltegeometrien kann nicht mit absoluter Sicherheit ausgeschlossen werden, dass diese neben der primären Haltefunktion ungewollt oder unverhinderbar auch andere Funktionen erfüllen, wie beispielsweise eine Tilgungsfunktion. Diese gegenüber der Primärfunktion nachrangige Nachrangfunktion steht jedoch in Ihrer von den Haltegeometrien verursachten Auswirkung stark gegenüber der Primärfunktion zurück. Von den Haltegeometrien sind daher andere Strukturen eines Wellentilgers zu unterscheiden, welche nicht primär dem Halten des Wellentilgers dienen. Beispielsweise dienen Radialanschlagsmittel primär der Begrenzung eines radialen Auslenkungswegs, obgleich diese ebenso wie die Haltegeometrien in Radialrichtung abragen können. Denkbar sind auch Strukturen, die an der Welle lediglich anliegen, ohne jedoch eine nennenswerte Presskraft zum Halten des Wellentilgers aufzubringen, wobei auch diese Strukturen nicht als Haltegeometrien verstanden werden können. Unter Einsatzzustand soll eine Situation verstanden werden, in welcher der Wellentilger im Montagezustand mit der Welle rotiert. Ein Winkelfenster kann die Form eines Kreissektors haben, wobei sich die beiden Kreisradien in der Längsmittelachse des Wellentilgers treffen.

Gemäß einer denkbaren Weiterbildung des Wellentilgers nach der Erfindung ist dieser derart ausgestaltet, dass im Montagezustand mindestens 60% der Wellentilger haltenden Presskraft von den Haltegeometrien innerhalb der beiden ersten Winkelfenster aufgebracht wird, vorzugsweise mindestens 70%, weiter bevorzugt mindestens 80%, noch weiter bevorzugt mindestens 90%, ganz besonders bevorzugt mindestens 95%. Je größer der Anteil der Presskraft der Haltegeometrien in den ersten Winkelfenstern ist, desto härter ist der Wellentilger entlang der ersten Abstimmungsachse ausgelegt.

Gemäß einer denkbaren Weiterbildung des Wellentilgers nach der Erfindung umfassen die Haltegeometrien Anlageflächen, über welche sie im Montagezustand an der Welle anliegen können. Diese Anlageflächen sind vorzugsweise an den distalen Innen- oder Außenumfangsflächen der Haltegeometrien angeordnet. Denkbar ist, dass die Anlageflächen im Vormontagezustand auf einer gedachten Zylinderoberfläche liegen, deren Längsmittelsachse koaxial mit der Längsmittelsachse des Wellentilgers ist. Dadurch kann im Montagezustand eine homogene Spannungsverteilung in der Haltegeometrie gewährleistet werden.

Gemäß einer denkbaren Weiterbildung des Wellentilgers nach der Erfindung umfasst er lediglich zwei Abstimmungsachsen, wobei vorzugsweise die erste Abstimmungsachse orthogonal zur der zweiten Abstimmungsachse angeordnet ist. Dadurch ist ein Wellentilger ausbildbar, der in die Raumrichtungen entlang der ersten Abstimmungsachse hält und in die rechtwinklig dazu verlaufenden Raumrichtungen entlang der zweiten Abstimmungsachse schwingt.

Gemäß einer denkbaren Weiterbildung des Wellentilgers nach der Erfindung ist der Elastomerkörper monolithisch mit den Haltegeometrien ausgebildet. Denkbar ist, dass der Elastomerkörper frei von einer stoffschlüssigen Verbindung mit einem Stabilisierungselement, insbesondere einer Befestigungshülse ist.

Gemäß einer Weiterbildung des Wellentilgers nach der Erfindung weist zumindest eine der Haltegeometrien zumindest einen Haltelängssteg auf. Denkbar ist, dass genau ein Haltelängssteg je Haltegeometrie vorgesehen und von dieser umfasst ist. Denkbar sind jedoch auch zwei, drei oder mehrere Haltelängsstege je Haltegeometrie. Denkbar ist, dass benachbarte Haltelängsstege einer Haltegeometrie in Umfangsrichtung äquidistant angeordnet sind. Denkbar ist, dass die beiden Haltegeometrien innerhalb der beiden ersten Winkelfenster identisch oder unterschiedlich ausgestaltet sind. Der Vorteil eines von der Stegnut gebildeten Raumes zwischen benachbarten Haltelängsstegen oder von Stegnuten innerhalb eines ersten Winkelfensters ist, dass sich die Haltegeometrie oder die Haltelängsstege beim Montieren besser ausbreiten können.

Gemäß einer denkbaren Weiterbildung des Wellentilgers nach der Erfindung verlaufen die Seitenwände zumindest eines Haltelängsstegs, vorzugsweise aller Haltelängsstege, parallel oder verkippt zur ersten Abstimmungsachse. Die Verkippung kann positiv erfolgen, so dass ein querschnittlich trapezförmiger Haltelängssteg ausgebildet ist, dessen kurze Seite vom Wellentilger abgewandt ist. Die Verkippung kann jedoch auch negativ erfolgen, so dass ein querschnittlich trapezförmiger Haltelängssteg ausgebildet ist, dessen lange Seite vom Wellentilger abgewandt ist. Die abgewandte Seite kann die Haltefläche umfassen. Bei einer positiven Verkippung kann ein Winkel im Übergang zwischen dem Haltelängssteg und dem benachbarten Abschnitt des Elastomerkörpers vergrößert werden, was zu Spannungsreduktion im Montage- und Einsatzzustand führt und dadurch zu einer Lebensdauererhöhung führt. Dieser Übergang kann zusätzlich einen Radius aufweisen. Die Haltelängsstege können querschnittlich ringsegmentartig ausgestaltet sein.

Gemäß einer Weiterbildung des Wellentilgers nach der Erfindung schließen die beiden ersten Winkelfenster in Umfangsrichtung miteinander mindestens zwei zweite Winkelfenster ein, wobei vorzugsweise diese zweiten Winkelfenster als Zwischenfreiräume ausgebildet sind oder sie solche umfassen und/oder frei von der Verpressung mit der Welle primär dienenden Haltegeometrien sind. Die zweiten Winkelfenster können demnach vorteilhaft dazu dienen, um ein möglichst freies Schwingen des Wellenlagers im Einsatzzustand zu gewährleisten. Die zweiten Winkelfenster können unmittelbar von den ersten Winkelfenstern eingeschlossen werden. Denkbar ist, dass das Wellenlager genau zwei zweite Winkelfenster umfasst. Die zweiten Winkelfenster können in Längsrichtung einseitig oder beidseitig offen oder geschlossen ausgeführt sein. Denkbar ist auch, dass die Haltegeometrien der beiden ersten Winkelfenster in Umfangsrichtung miteinander mindestens zwei Zwischenfreiräume einschließen.

Gemäß einer denkbaren Weiterbildung des Wellentilgers nach der Erfindung umfassen die zweiten Winkelfenster jeweils einen querschnittlich ringsegmentförmigen Raum. Der ringsegmentförmige Raum kann sich in Umfangsrichtung zwischen den beiden ersten Winkelfenstern oder den benachbarten Haltegeometrien der beiden ersten Winkelfenster erstrecken und/oder in Radialrichtung zur einen Seite von dem Elastomerkörper, von der Tilgermasse oder von dem die Tilgermasse unmittelbar umgebenden Elastomerabschnitt begrenzt sein und andererseits offen sein. Die Öffnung in Radialrichtung kann bei einem Innenrohrtilger nach Radial außen vorliegen und bei einem Seitenwellentilger nach Radial innen vorliegen.

Gemäß einer denkbaren Weiterbildung des Wellentilgers nach der Erfindung sind die Haltegeometrien ausschließlich innerhalb der ersten Winkelfenster angeordnet. Dadurch kann der Wellentilger entlang der ersten Abstimmungsachse sehr hart abgestimmt werden und gleichsam entlang einer anderen Abstimmungsachse sehr weich abgestimmt werden.

Gemäß einer Weiterbildung des Wellentilgers nach der Erfindung sind die Haltegeometrien bezüglich der Längsmittelachse rotationssymmetrisch angeordnet, vorzugsweise mit einer Zähligkeit von zwei. Zusätzlich oder alternativ können die Haltegeometrien bezüglich einer zentralen Längsmittelebene spiegelsymmetrisch angeordnet sein. In dieser zentralen Längsmittelebene liegt die Längsmittelachse des Wellentilgers. Dadurch können beide ersten Winkelfenster identisch ausgestaltet sein.

Gemäß einer denkbaren Weiterbildung des Wellentilgers nach der Erfindung liegen sich die Haltegeometrien der ersten Winkelfenster bezüglich der Längsmittelachse diametral gegenüber. Dadurch kann die erste Abstimmungsachse die Längsmittelsachse des Wellentilgers schneiden.

Gemäß einer Weiterbildung des Wellentilgers nach der Erfindung beträgt die Winkelsumme der zweiten Winkelfenster bezüglich der Längsmittelachse in einem Querschnitt des Wellentilgers mindestens 180°, vorzugsweise mindestens 220°, weiter bevorzugt mindestens 240°. Dadurch kann eine große Innen- oder Außenumfangsfläche des Wellentilgers zur Ausbildung eines radialen Auslenkungswegs genutzt werden.

Gemäß einer denkbaren Weiterbildung des Wellentilgers nach der Erfindung beträgt die Winkelsumme der ersten Winkelfenster bezüglich der Längsmittelachse in einem Querschnitt des Wellentilgers höchstens 140°, vorzugsweise höchstens 120°, weiter bevorzugt höchstens 90°. Dadurch können kleine Fenster und gleichsam kleine Überdeckungsbreiten zwischen den Haltegeometrien und der Welle realisiert werden, was wiederum der Raum zum Schwingen des Wellentilgers vergrößert. eine große Innen- oder Außenumfangsfläche des Wellentilgers zur Ausbildung eines radialen Auslenkungswegs genutzt werden.

Gemäß einer Weiterbildung des Wellentilgers nach der Erfindung beträgt die Winkelsumme von umfangsseitigen Halteflächen der Haltegeometrien bezüglich der Längsmittelachse in einem Querschnitt höchstens 180°, vorzugsweise höchstens 160°, weiter bevorzugt höchsten 140°, noch weiter bevorzugt höchstens 120°. Denkbar sind auch höchstens 100°. Die Halteflächen können innen- oder außenumfangsseitige Halteflächen sein, je nach Wellentilgertyp. Vorzugsweise sind die in den ersten Winkelfenstern angeordneten Halteflächen zu beiden Seiten der Längsmittelsachse gleich groß.

Gemäß einer denkbaren Weiterbildung des Wellentilgers nach der Erfindung umfasst dieser eine von dem Elastomerkörper zumindest abschnittsweise, vorzugsweise ganz, umgebene und davon materialverschiedene Tilgermasse. Die Tilgermasse kann aus einem Metall gebildet sein. Es kann ein Radialanschlag ohne metallisches Geräusch realisiert und ein Korrosionsschutz der Masse erreicht werden.

Gemäß einer Weiterbildung des Wellentilgers nach der Erfindung ist er frei von einem Stabilisierungselement, insbesondere einer Befestigungshülse oder einer Schelle, wobei vorzugsweise sich die Haltegeometrien zwischen Tilgermasse und ihrer jeweiligen Haltefläche und/oder in ihrer Radialerstreckung ohne Zwischenschaltung eines Stabilisierungselements, insbesondere einer Befestigungshülse, erstrecken. Ein Stabilisierungselement zeichnet sich dadurch aus, dass es zylindrisch ausgebildet ist und im Montagezustand eine radiale Presskraft gewährleistet, die größer als eine axiale Auspresskraft ist, um einen Tilger dauerhaft zu fixieren. Durch die Ausbildung der Haltelängsstege und deren Anordnung explizit in den beiden ersten Winkelfenstern sind derartige Stabilisierungselemente überflüssig. Dadurch sind Herstellungskosten und Montageaufwand erheblich reduziert.

Gemäß einer denkbaren Weiterbildung des Wellentilgers nach der Erfindung ist zumindest eine der Haltegeometrien in Radialrichtung von einer Längsausnehmung in der Tilgermasse hinterbaut. Gleiches gilt analog für Haltelängsstege. Dadurch kann eine Elastomergeometrie ausgebildet werden, die eine größere Radialerstreckung aufweist, als ohne Längsausnehmung. Auch hierdurch lässt sich die Härte in Richtung der ersten Anpassungsachse und die Schwingfähigkeit oder das Auslenkungsvermögen quer dazu beeinflussen.

Gemäß einer denkbaren Weiterbildung des Wellentilgers nach der Erfindung weist zumindest eine der Haltegeometrien zumindest eine in Längsrichtung verlaufende Stegnut auf. Die Stegnut trennt Abschnitte der Haltegeometrie in Umfangsrichtung. Sie kann beispielsweise zwischen Haltelängsstegen angeordnet sein. Die Stegnut kann eine Radialerstreckung von der Radialerstreckung der Haltegeometrie oder der benachbarten Haltelengsstege aufweisen. Sie kann jedoch auch kürzer ausgebildet sein, beispielsweise eine halbe oder eine Drittel Radialerstreckung von der Radialerstreckung der Haltegeometrie oder der benachbarten Haltelengsstege aufweisen. Der Vorteil eines von der Stegnut gebildeten Raumes zwischen benachbarten Haltelängsstegen oder von Stegnuten innerhalb eines ersten Winkelfensters ist, dass sich die Haltegeometrie oder die Haltelängsstege beim Montieren besser ausbreiten können.

Gemäß einer denkbaren Weiterbildung des Wellentilgers nach der Erfindung sind die Stegnuten im Querschnitt V-förmig, U-förmig, halboval oder halbkreisförmig ausgebildet. Denkbar ist, dass sich die Stegnuten parallel zur Längsmittelsachse des Wellentilgers erstrecken.

Gemäß einer Weiterbildung des Wellentilgers nach der Erfindung liegen im unbelasteten Vormontagezustand des Wellentilgers die Halteflächen auf einer ersten gedachten Zylinderoberfläche mit erstem Zylinderdurchmesser und im mit der Welle verpressbaren Montagezustand des Wellentilgers können die Halteflächen auf einer zweiten gedachten Zylinderoberfläche mit zweitem Zylinderdurchmesser liegen, wobei entweder der zweite Durchmesser höchstens eine 0,95-fache, vorzugsweise höchstens eine 0,9-fache, weiter bevorzugt höchstens eine 0,85-fache Größe des ersten Durchmessers beträgt oder der erste Durchmesser höchstens eine 0,95-fache, vorzugsweise höchstens eine 0,9-fache, weiter bevorzugt höchstens eine 0,85-fache Größe des zweiten Durchmessers beträgt. Die gedachten Zylinder können koaxial zueinander sein, sich also eine Achse teilen. Diese Werte geben die Durchmesserreduktion des Wellentilgers nach der Montage an. Grundsätzlich kann eine größere Durchmesserveränderung zu einer höheren Presskraft führen, wobei sich im Umfeld jedes beanspruchten Wertes kein anderer technischer Effekt als im beanspruchten Bereich einstellt. Der Effekt mag lediglich in seiner Ausprägung variieren.

Gemäß einer Weiterbildung des Wellentilgers nach der Erfindung weist der Elastomerkörper zumindest ein in Radialrichtung in dem zweiten Winkelfenster abragendes Radialanschlagsmittel, vorzugsweise einen Anschlagssteg auf, welches derart ausgebildet ist, dass es im Montagezustand eine geringere Erstreckung in Radialrichtung aufweist als die Haltegeometrien. Die geringere Radialerstreckung liegt jedoch auch im Vormontagezustand vor. Denkbar ist, dass Radialanschlagsmittel bezüglich der Längsmittelsachse des Wellentilgers diametral zueinander angeordnet und spiegelsymmetrisch bezüglich einer zentralen Längsebene angeordnet sind in welcher die Längsmittelsachse des Wellentilgers und/oder die erste Abstimmungsachse liegt. Durch eine entsprechende Konturierung des Elastomerkörpers in eine Raumrichtung abweichend von derjenigen der ersten Abstimmungsachse oder in Richtung der zweiten Abstimmungsachse kann eine Kennlinie mit linearem oder progressivem Verlauf eingestellt und die Lebensdauer verbessert werden.

Gemäß einer denkbaren Weiterbildung des Wellentilgers nach der Erfindung ist das Radialanschlagsmittel im Querschnitt länglich rechteckig, dreieckig, halboval oder halbrund ausgebildet.

Gemäß einer denkbaren Weiterbildung des Wellentilgers nach der Erfindung entspricht im Montagezustand des Wellentilgers eine Radialdistanz zwischen einer Umfangsfläche der Tilgermasse und zumindest einer der Halteflächen, höchstens dem 0,25-fachen, vorzugsweise höchstens dem 0,125-fachen, weiter bevorzugt höchstens dem 0,1-fachen Tilgermassedurchmesser.

Erfindungsgemäß ist zudem eine Baugruppe vorgeschlagen, umfassend eine Welle und einen offenbarungsgemäßen Wellentilger, welcher mit der Welle über Halteflächen von Haltegeometrien verpresst ist. Der Wellentilger kann zum Beispiel ein Innenrohrtilger sein, der in einem inneren Hohlraum einer Hohlwelle befestigt werden kann, oder aber auch ein Seitenwellentilger sein, der auf der Außenumfangsfläche an einer Welle, befestigt werden kann. Die Welle kann eine Längswelle oder eine Seitenwelle sein. Denkbar sind auch mehrere Wellen mit mehreren gleichen oder unterschiedlichen Wellentilgern.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: einen aus der Praxis bekannten Tilger;
- Fig. 2: eine schematische Schnittdarstellung eines Fahrzeugs mit Wellentilgern;
- Fig. 3: einen erfindungsgemäßen Wellentilger gemäß erster Ausführungsform in perspektivischer Ansicht;
- Fig. 4: den Wellentilger nach Fig. 3 in einer Stirnansicht;
- Fig. 5: den Wellentilger nach Fig. 3 in einer Schnittansicht entlang der Linie V-V nach Fig. 4;
- Fig. 6: den Wellentilger nach Fig. 3 in einer Schnittansicht entlang der Linie VI-VI nach Fig. 4;
- Fig. 7: einen erfindungsgemäßen Wellentilger gemäß zweiter Ausführungsform in perspektivischer Ansicht;
- Fig. 8: den Wellentilger nach Fig. 7 in einer Stirnansicht;
- Fig. 9: den Wellentilger nach Fig. 7 in einer Schnittansicht entlang der Linie IX-IX nach Fig. 8; und
- Fig. 10: den Wellentilger nach Fig. 3 in einer Schnittansicht entlang der Linie X-X nach Fig. 8.

In den Figuren sind gleiche oder einander entsprechende Elemente jeweils mit den gleichen Bezugszeichen bezeichnet und werden daher, sofern nicht zweckmäßig, nicht erneut beschrieben. Bereits beschriebene Merkmale werden zur Vermeidung von Wiederholungen nicht erneut beschrieben und sind auf alle Elemente mit gleichen oder einander entsprechenden Bezugszeichen anwendbar, sofern nicht explizit ausgeschlossen. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z. B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

In Figur 1 ist exemplarisch ein aus der Praxis bekannter Tilger 102 als Innenrohrtilger in Vormontagestellung gezeigt. Dieser Tilger 102 ist zentral von einer Längsmittelsachse A durchsetzt und weist eine Längsrichtung L, eine Radialrichtung R, sowie eine Umfangsrichtung U auf. Der Tilger 102 ist zum Tilgen von Schwingungen in einer Welle 4 befestigbar und umfasst einen Elastomerkörper 108. Der Elastomerkörper 108 umgibt eine zentrale und vollzylindrische Tilgermasse 112. In Fig. 1 ist lediglich aus Gründen der Veranschaulichung ein Teil des Elastomerkörpers 108 ausgeblendet, um die Tilgermasse 112 darzustellen. Innerhalb des Elastomerkörpers 108 und umfangsseitig der Tilgermasse 112 ist als Befestigungselement eine Befestigungshülse 140 angeordnet. Der Elastomerkörper 108 weist außenumfangsseitig der Befestigungshülse 140 in Radialrichtung R von der Befestigungshülse 140 abragende und sich in Längsrichtung L erstreckende Haltegeometrien auf, welche jeweils als Haltelängsstege 114 ausgebildet sind und zum Verpressen des Tilgers 102 mit einer Welle dienen. Die Haltelängsstege 114 weisen hierzu jeweils eine außenumfangsseitige Halteflächen 118 auf. Erkennbar ist nun, dass die Haltelängsstege 114 allesamt identisch ausgestaltet sind und in Umfangsrichtung U gleichmäßig zueinander beabstandet angeordnet sind. Daher ist der Tilger 102 in alle Radialrichtungen R identisch abgestimmt, weshalb dieser als Radialtilger bezeichnet werden kann. Die Befestigungshülse 140 dient einerseits dazu, um die Haltelängsstege 114 zu hinterbauen und dadurch eine ausreichend große radiale Presskraft zu realisieren, und andererseits dazu, um die Tilgermasse 112 in alle Radialrichtungen R frei schwingend zu lagern.

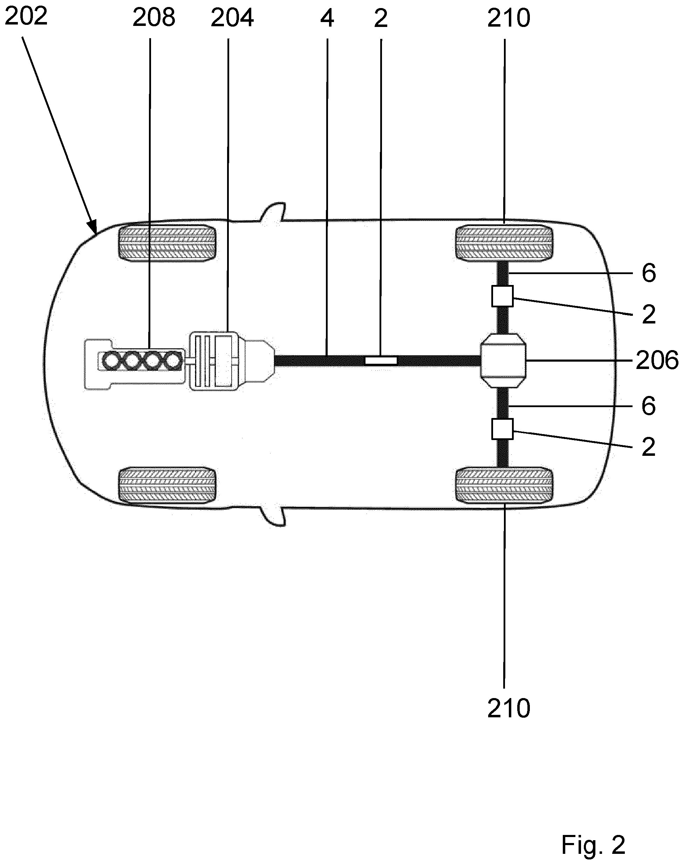

In Figur 2 ist ein Fahrzeug 202 mit einem Getriebe 204 im vorderen Teil des Fahrzeugs und einem Differential 206 am Heck dargestellt. Das Getriebe 204 überträgt die Kraft eines Motors 208 mittels einer Fahrzeuglängswelle, die eine Welle 4 sein kann, auf das Differential 206. Das Differential 206 wiederum ist über Seitenwellen, die als Wellen 6 bezeichnet werden können, mit den Hinterrädern 210 verbunden. Die Fahrzeuglängswelle ist hohl und umfasst einen erfindungsgemäßen Wellentilger 2 als Innenrohrtilger zum Tilgen von Schwingungen der Welle 4. Die Seitenwellen umfassen ebenfalls jeweils einen Wellentilger 2 als Seitenwellentilger zum Tilgen von Schwingungen der jeweiligen Welle 6. Obgleich hier ein Fahrzeug 202 mit Verbrennungsmotor gezeigt ist, ist die Erfindung jedoch ohne Weiteres auch auf Hybrid- oder vollelektrische Fahrzeuge übertragbar.

Erfindungsgemäß ist zudem eine Baugruppe vorgeschlagen, umfassend eine Welle und einen offenbarungsgemäßen Wellentilger, welcher mit der Welle über Halteflächen von Haltegeometrien verpresst ist. Der Wellentilger kann zum Beispiel ein Innenrohrtilger sein, der in einem inneren Hohlraum einer Hohlwelle befestigt werden kann, oder aber auch ein Seitenwellentilger sein, der auf der Außenumfangsfläche an einer Welle, befestigt werden kann. Die Welle kann eine Längswelle oder eine Seitenwelle sein. Denkbar sind auch mehrere Wellen mit mehreren gleichen oder unterschiedlichen Wellentilgern.

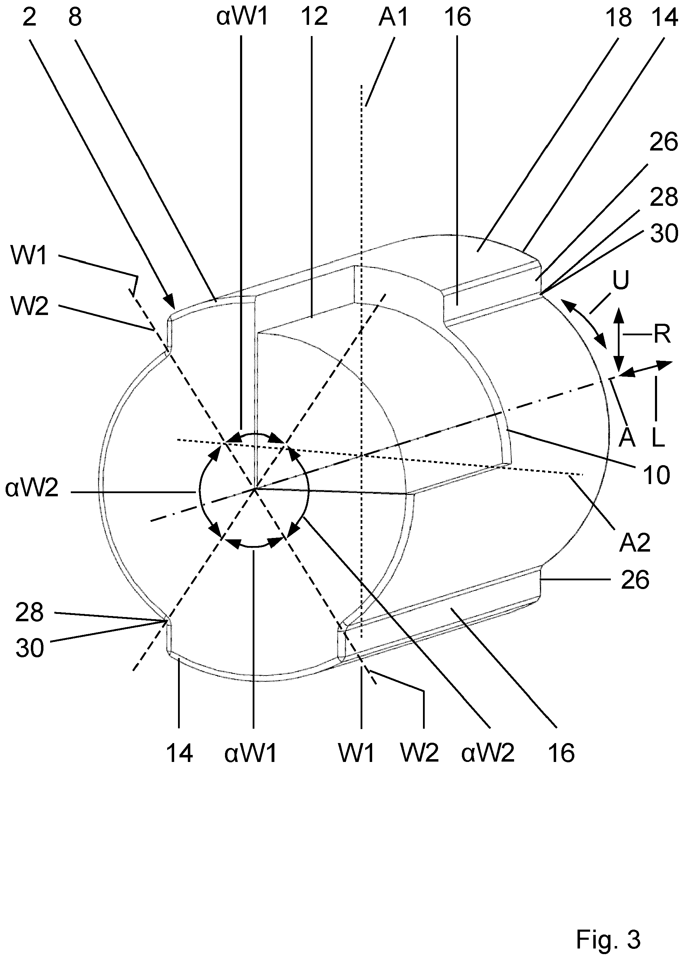

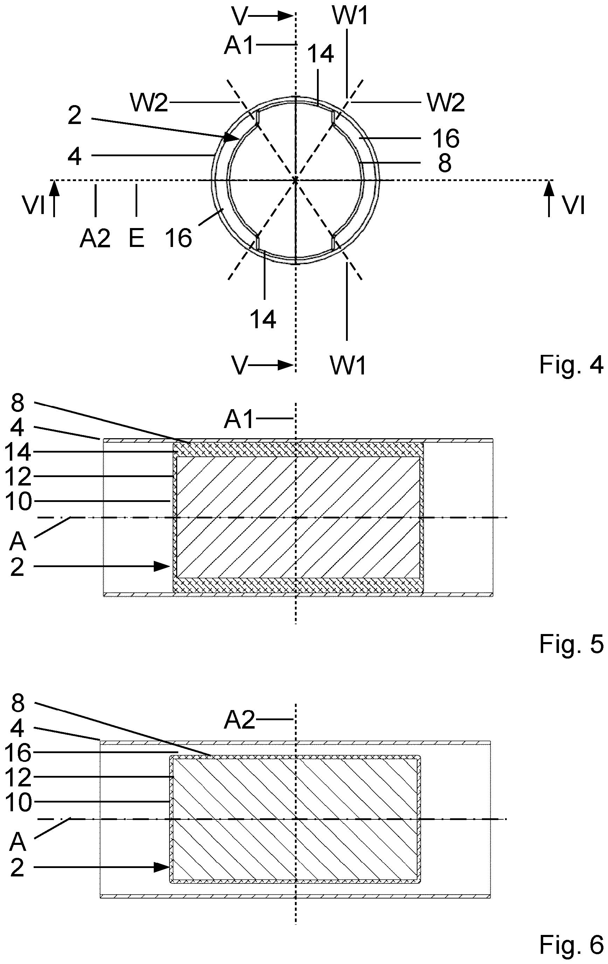

In den Figuren 3 bis 6 ist ein erfindungsgemäßer Wellentilger 2 in einer Ausführungsform als Innenrohrtilger in Vormontagestellung gezeigt. Dieser Wellentilger 2 ist zentral von einer Längsmittelsachse A durchsetzt und weist eine Längsrichtung L, eine Radialrichtung R, sowie eine Umfangsrichtung U auf. Der Wellentilger 2 ist zum Tilgen von Schwingungen in einer Welle 4 befestigbar und umfasst einen monolithischen Elastomerkörper 8. Der Elastomerkörper 8 ist frei von einer stoffschlüssigen Verbindung mit einem Stabilisierungselement, insbesondere einer Befestigungshülse 140. Der Wellentilger 2 umfasst eine vollzylindrische Tilgermasse 12, die vollständig vom Elastomerkörper 8 umgeben ist. In Fig. 3 ist lediglich aus Gründen der Veranschaulichung ein Teil des Elastomerkörpers 8 ausgeblendet, um die Tilgermasse 12 darzustellen.

Im Gegensatz zu bekannten Tilgern, beispielhaft dargestellt mittels Tilger 102 in Fig. 1, weist der erfindungsgemäße Wellentilger 2 keine in Umfangsrichtung gleichmäßig zueinander beabstandete Haltegeometrien auf. Hierzu umfasst der Wellentilger 2 zwei sich bezüglich der Längsmittelachse A diametral gegenüberliegende und erste Winkelfenster W1 mit einer gleichen Breite von aW1 auf. Die ersten Winkelfenster W1 schließen in Umfangsrichtung U unmittelbar miteinander zwei zweite Winkelfenster W2 mit einer gleichen Breite von aW2 ein.

Der Elastomerkörper 8 weist einen hohlzylindrischen Grundkörper 10 und in Radialrichtung R davon abragende und sich in Längsrichtung L erstreckende Haltegeometrien auf, welche jeweils als Haltelängsstege 14 ausgebildet sind und zum Verpressen des Wellentilgers 2 mit der Welle 4 dienen. Die Haltelängsstege 14 weisen hierzu jeweils eine außenumfangsseitige Haltefläche 18 auf, an welcher die Welle 4 im Montagezustand anliegt. Die Haltelängsstege 14 erstrecken sich über die gesamte Längserstreckung des Wellentilgers. Die Haltelängsstege 14 erstrecken sich zwischen der Tilgermasse 12 und ihrer jeweiligen Haltefläche 18 ohne Zwischenschaltung eines Stabilisierungselements, insbesondere einer Befestigungshülse. Die Haltelängsstege 14 sind lediglich in den ersten Winkelfenstern W1 angeordnet und die beiden zweiten Winkelfenster W2 sind frei von der Verpressung mit der Welle 4 dienenden Haltegeometrien. Das führt dazu, dass sich in Radialrichtung R zwei unterschiedliche Abstimmungsachsen A1 und A2 ausbilden, welche die Längsmittelachse A schneiden.

Die erste Abstimmungsachse A1 verläuft zentral durch die ersten Winkelfenster W1, während die zweite Abstimmungsachse senkrecht dazu zentral durch die beiden zweiten Winkelfenster W2 verläuft. Der Wellentilger 2 ist entlang der ersten Abstimmungsachse A1 vermittels der Haltegeometrien hoch abgestimmt oder abstimmbar. In diese Richtung ist er hart. Durch diese hohe Abstimmung entlang der ersten Abstimmungsachse A1 ist eine ausreichend hohe axiale Presskraft realisierbar. Der Wellentilger 2 ist entlang der von der ersten Abstimmungsachse A1 abweichenden Raumrichtung oder entlang der von der ersten Abstimmungsachse A1 abweichenden zweiten Abstimmungsachse A2 auf die Abstimmungsfrequenz für die Biegeeigenform der Welle 4 abgestimmt oder abstimmbar. In diese Richtung ist er weich. Die Primärfunktion des Wellentilgers 2 oder seiner dortigen Strukturen ist die Frequenzabstimmung. Daher bildet der Wellentilger 2 entlang der ersten Abstimmungsachse A1 eine radiale Presskraft mit der Welle 4 aus, welche größer ist als eine Presskraft entlang der zweiten Abstimmungsachse A2.

In der gezeigten Ausführungsform sind die Haltegeometrien ausschließlich innerhalb der ersten Winkelfenster A1 angeordnet. Im Montagezustand wird daher 100% der Wellentilger 2 haltenden Presskraft von den Haltegeometrien innerhalb der beiden ersten Winkelfenster W1 aufgebracht.

Der Wellentilger 2 ist bezüglich der Längsmittelachse A rotationssymmetrisch angeordnet mit einer Zähligkeit von zwei. Zusätzlich sind die Haltegeometrien bezüglich einer zentralen Längsmittelebene E spiegelsymmetrisch angeordnet sein. In dieser zentralen Längsmittelebene liegt die Längsmittelachse des Wellentilgers.

Die gezeigten Haltelängsstege 14 sind querschnittlich ringsegmentartig ausgestaltet, wobei deren jeweilige in Umfangsrichtung U weisenden Seitenwände 26 im Querschnitt gesehen parallel zur ersten Abstimmungsachse A1 verlaufen. Somit schließt jede der Seitenwände 26 mit dem Grundkörper 10 einen Winkel ein, der größer als 90° ist. Zwischen jeder Seitenwand 26 und dem Grundkörper 10 ist eine Kante 28 einer Seitenwandbasis 30 mit einem Radius versehen.

Die beiden Haltelängsstege 14 sind derart ausgestaltet, dass deren beide Halteflächen 18 bezüglich der Längsmittelachse in einem Querschnitt eine Winkelsumme von 120° aufweisen. Die in den beiden ersten Winkelfenstern W1 angeordneten Halteflächen 18 zu beiden Seiten der Längsmittelachse A sind gleich groß. Somit nutzt der Wellentilger 2 zu seiner Fixierung an der Welle 4 lediglich 1/3 seiner gesamten Umfangsfläche.

Der Abschnitt des Grundkörpers 10 des Elastomerkörpers 8, der in den beiden Winkelfenstern W2 angeordnet ist, dient als Radialanschlagsmittel. Die zwei zweiten Winkelfenster W2 sind als Zwischenfreiräume 16 ausgebildet und frei von der Verpressung mit der Welle 4 primär dienenden Haltegeometrien und dienen demnach vorteilhaft dazu, um ein möglichst freies Schwingen des Wellenlagers 2 im Einsatzzustand zu gewährleisten. Die zweiten Winkelfenster W2 sind querschnittlich ringsegmentartig ausgestaltet und sind in Längsrichtung L beidseitig offen ausgeführt. Deren ringsegmentförmiger Raum erstreckt sich in Umfangsrichtung U zwischen den beiden ersten Winkelfenstern W1. In Radialrichtung ist der ringsegmentförmiger Raum innenseitig von dem Elastomerkörper 8 bzw. dem Elastomerabschnitt begrenzt, der die Tilgermasse 12 unmittelbar umgibt. Gegenüberliegend ist der ringsegmentförmige Raum offen aufgeführt, so dass er im Montagezustand von der Innenumfangsfläche der Welle 4 begrenzt wird.

Der erfindungsgemäße Wellentilger 2 weist folglich keine Abstimmung mit der radialen Eigenfrequenz in alle Radialrichtungen R auf. Vielmehr ist lediglich die Frequenz nur in einer Richtung (und der entgegengesetzten Richtung) auf die Biegeeigenform der Welle 4 abgestimmt. Die Frequenz einer zweiten Radialrichtung (und der entgegengesetzten Richtung) ist signifikant höher abgestimmt, um im Montage- und Einsatzzustand eine geforderte axiale Presskraft erreicht werden kann, die den Wellentilger 2 dauerhaft an der Welle 4 fixiert.

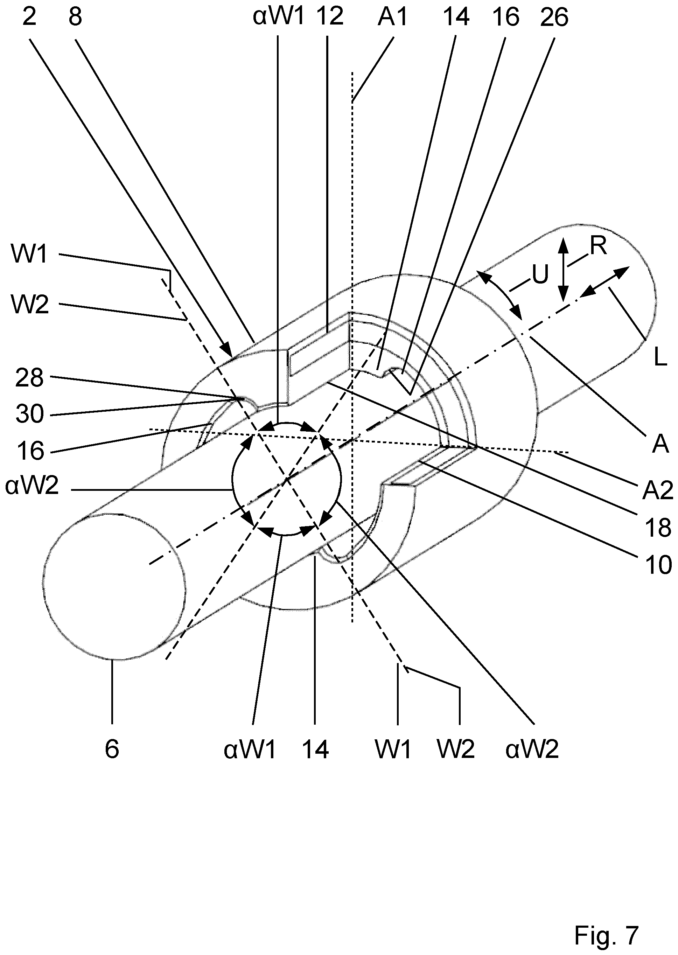

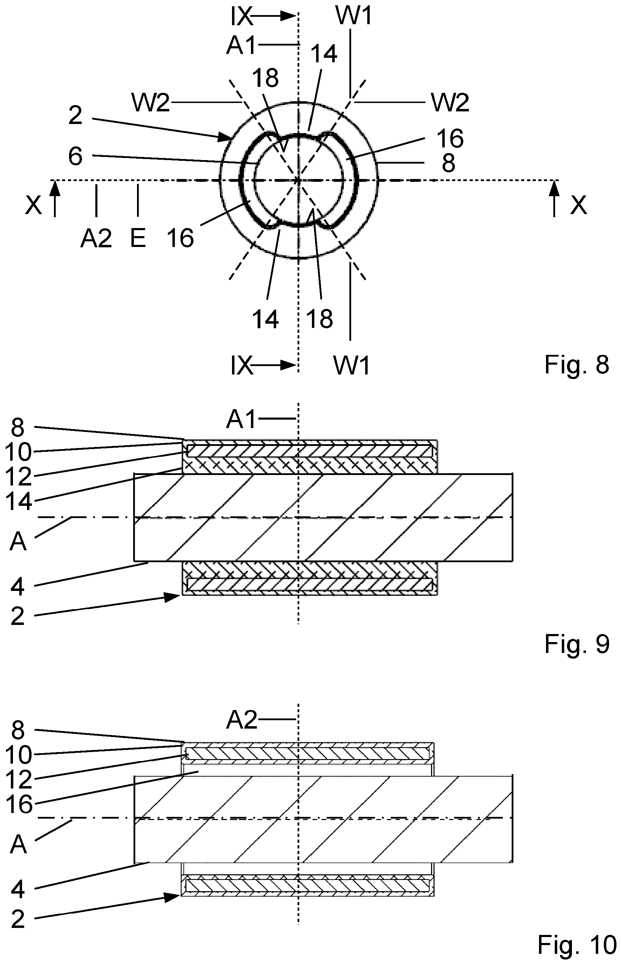

In den Figuren 7 bis 10 ist ein erfindungsgemäßer Wellentilger 2 in einer Ausführungsform als Seitenwellentilger in Montagestellung gezeigt. Um Wiederholungen zu vermeiden sollen im Folgenden lediglich die Unterschiede zur ersten Ausführungsform erläutert werden.

Der Wellentilger 2 ist zum Tilgen von Schwingungen am Umfang einer Welle 6 befestigt. Der Wellentilger 2 umfasst eine hohlzylindrische Tilgermasse 12, die vollständig vom Elastomerkörper 8 umgeben ist. In Fig. 7 ist lediglich aus Gründen der Veranschaulichung ein Teil des Wellentilgers 2 ausgeblendet, um die Tilgermasse 12 darzustellen. Der Wellentilger weist kein Stabilisierungselement auf, insbesondere eine Schlauchschelle.

Die Haltelängsstege 14 weisen jeweils eine innenumfangsseitige Haltefläche 18 auf, an welcher die Welle 6 im Montagezustand anliegt.

Die gezeigten Haltelängsstege 14 sind querschnittlich trapezförmig ausgestaltet, wobei deren jeweilige in Umfangsrichtung U weisenden Seitenwände 26 im Querschnitt gesehen gewölbt zur ersten Abstimmungsachse A1 verlaufen. Jede Seitenwand 26 ist als Radius ausgebildet und läuft seitenwandbasisseitig in den Grundkörper 10 über. Die beiden Haltelängsstege 14 sind derart ausgestaltet, dass deren beide Halteflächen 18 bezüglich der Längsmittelachse in einem Querschnitt eine Winkelsumme von 100° aufweisen. Somit nutzt der Wellentilger 2 zu seiner Fixierung an der Welle 6 lediglich etwa 28% seiner gesamten Umfangsfläche.

Die zweiten Winkelfenster W2 sind querschnittlich ringsegmentartig ausgestaltet und sind in Längsrichtung L beidseitig offen ausgeführt. Deren ringsegmentförmiger Raum erstreckt sich in Umfangsrichtung U zwischen den beiden ersten Winkelfenstern W1. In Radialrichtung ist der ringsegmentförmiger Raum außenseitig von dem Elastomerkörper 8 bzw. dem Elastomerabschnitt begrenzt, der die Tilgermasse 12 unmittelbar umgibt. Gegenüberliegend ist der ringsegmentförmige Raum offen aufgeführt, so dass er im Montagezustand von der Außenumfangsfläche der Welle 6 begrenzt ist.

Die Erfindung ist nicht auf eine der vorbeschriebenen Ausführungsformen beschränkt, sondern in vielfältiger Weise abwandelbar. Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

In den Rahmen der Erfindung fallen sämtliche Kombinationen aus zumindest zwei von den in der Beschreibung, den Ansprüchen und/oder den Figuren offenbarten Merkmalen.

Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale als vorrichtungsgemäß offenbart gelten und beanspruchbar sein.

### Bezugszeichenliste

- 2: Wellentilger
- 4: Welle
- 6: Welle
- 8: Elastomerkörper
- 10: Grundkörper
- 12: Tilgermasse
- 14: Haltelängssteg
- 16: Zwischenfreiraum
- 18: Haltefläche
- 26: Seitenwand
- 28: Kante
- 30: Seitenwandbasis
- 102: Tilger
- 108: Elastomerkörper
- 112: Tilgermasse
- 114: Haltelängssteg
- 118: Haltefläche
- 140: Befestigungshülse
- 202: Fahrzeug
- 204: Getriebe
- 206: Differential
- 208: Motor
- 210: Hinterrad

- A: Längsmittelachse
- A1: erste Abstimmungsachse
- A2: zweite Abstimmungsachse
- E: Längsmittelebene
- L: Längsrichtung
- R: Radialrichtung
- U: Umfangsrichtung
- W1: erstes Winkelfenster
- W2: zweites Winkelfenster

- aW1: Breite des ersten Winkelfensters
- aW2: Breite des zweiten Winkelfensters

## Patentansprüche

1. Wellentilger zum Tilgen von Schwingungen einer Welle (4, 6), umfassend einen Elastomerkörper (8), welcher von einer zentralen Längsmittelachse (A) durchgriffen ist, wobei der Elastomerkörper (8) in Radialrichtung (R) abragende und sich in Längsrichtung (L) erstreckende Haltegeometrien aufweist zum Verpressen des Wellentilgers mit der Welle (4, 6), **dadurch gekennzeichnet, dass** die Haltegeometrien jeweils in zwei sich bezüglich der Längsmittelachse (A) gegenüberliegenden ersten Winkelfenstern (W1) mit einer Breite von jeweils höchstens 90° angeordnet sind, so dass der Wellentilger (2) entlang einer ersten Abstimmungsachse (A1), die in Radialrichtung (R) verläuft, eine radiale Presskraft mit der Welle (4, 6) ausbilden kann, welche größer ist als eine Presskraft in einer davon abweichenden Raumrichtung, die in Radialrichtung (R) verläuft.

2. Wellentilger nach Anspruch 1, **dadurch gekennzeichnet, dass** zumindest eine der Haltegeometrien zumindest einen Haltelängssteg (14) aufweist.

3. Wellentilger nach einem der vorangehenden Ansprüche, **dadurch gekennzeichnet, dass** die beiden ersten Winkelfenster (W1) in Umfangsrichtung (U) miteinander mindestens zwei zweite Winkelfenster (W2) einschließen, wobei vorzugsweise diese zweiten Winkelfenster (W2) als Zwischenfreiräume (16) ausgebildet sind oder sie solche umfassen und/oder frei von der Verpressung mit der Welle (4, 6) primär dienenden Haltegeometrien sind.

4. Wellentilger nach einem der vorangehenden Ansprüche, **dadurch gekennzeichnet, dass** die Haltegeometrien bezüglich der Längsmittelachse (A) rotationssymmetrisch angeordnet sind, vorzugsweise mit einer Zähligkeit von zwei und/oder die Haltegeometrien bezüglich einer zentralen Längsmittelebene (E) spiegelsymmetrisch angeordnet sind.

5. Wellentilger nach einem der vorangehenden Ansprüche, **dadurch gekennzeichnet, dass** die Winkelsumme der zweiten Winkelfenster (W2) bezüglich der Längsmittelachse (A) in einem Querschnitt des Wellentilgers (2) mindestens 180°, vorzugsweise mindestens 220°, weiter bevorzugt mindestens 240° beträgt.

6. Wellentilger nach einem der vorangehenden Ansprüche, **dadurch gekennzeichnet, dass** die Winkelsumme von umfangsseitigen Halteflächen (18) der Haltegeometrien bezüglich der Längsmittelachse (A) in einem Querschnitt höchstens 180°, vorzugsweise höchstens 160°, weiter bevorzugt höchsten 140°, noch weiter bevorzugt höchstens 120° beträgt.

7. Wellentilger nach einem der vorangehenden Ansprüche, **dadurch gekennzeichnet, dass** er frei von einem Stabilisierungselement, insbesondere einer Befestigungshülse () ist, wobei vorzugsweise sich die Haltegeometrien zwischen Tilgermasse (12) und ihrer jeweiligen Haltefläche (18) und/oder in ihrer Radialerstreckung ohne Zwischenschaltung eines Stabilisierungselements, insbesondere einer Befestigungshülse (), erstrecken.

8. Wellentilger nach einem der vorangehenden Ansprüche, **dadurch gekennzeichnet, dass** im unbelasteten Vormontagezustand des Wellentilgers die Halteflächen (18) auf einer ersten gedachten Zylinderoberfläche mit erstem Zylinderdurchmesser liegen und im mit der Welle (4, 6) verpressbaren Montagezustand des Wellentilgers die Halteflächen (18) auf einer zweiten gedachten Zylinderoberfläche mit zweitem Zylinderdurchmesser liegen können, wobei entweder der zweite Durchmesser höchstens eine 0,95-fache, vorzugsweise höchstens eine 0,9-fache, weiter bevorzugt höchstens eine 0,85-fache Größe des ersten Durchmessers beträgt oder der erste Durchmesser höchstens eine 0,95-fache, vorzugsweise höchstens eine 0,9-fache, weiter bevorzugt höchstens eine 0,85-fache Größe des zweiten Durchmessers beträgt.

9. Wellentilger nach einem der vorangehenden Ansprüche, **dadurch gekennzeichnet, dass** der Elastomerkörper (8) zumindest ein in Radialrichtung (R) in dem zweiten Winkelfenster (W2) abragendes Radialanschlagsmittel, vorzugsweise einen Anschlagssteg () aufweist, welches derart ausgebildet ist, dass es im Montagezustand eine geringere Erstreckung in Radialrichtung (R) aufweist als die Haltegeometrien.

10. Baugruppe, umfassend
eine Welle (4, 6) und
einen Wellentilger (2) nach einem der vorangehenden Ansprüche, welcher mit der Welle (4, 6) über Halteflächen (18) von Haltegeometrien verpresst ist.
